# EUROPEAN PATENT APPLICATION

(11) **EP 1 582 507 A2**
(43) Date of publication of application: **05.10.2005**
(21) Application number: 05006019.3
(22) Date of filing: 18.03.2005
(51) Int. Cl.: C03B 33/03

(54) **Cutting table particularly for glass panes and the like, that allows optimization of the useful cutting dimensions**

(30) Priority: 30.03.2004 IT MI20040639
(71) Applicant: Z. BAVELLONI S.p.A., I-22070 Bregnano (Como) (IT)
(72) Inventor: Bavelloni, Franco, 22020 San Fermo della Battaglia (Como) (IT)
(74) Representative: Modiano, Guido

(57) **Abstract**

A cutting table particularly for glass panes and the like, that allows optimization of the useful cutting dimensions, comprising a frame forming a cutting bed (3) on which a cutting bridge (4) can move; the bridge (4) supports a cutting head (5) and can slide on guides (6) that are fixed to the frame (2) by means of sliding carriages (10) provided with two mutually spaced upper wheels (11), which can engage the upper part of the guides (6), the cutting table further comprising a central upper wheel (30), which is arranged between the upper wheels (11) and at least two lower abutment elements (31), which can engage the lower part of the guides (6) and are positioned on opposite sides with respect to the central upper wheel (30).

## Description

The present invention relates to a cutting table particularly for glass panes and the like that allows optimization of the useful cutting dimensions.

As is known, cutting tables have a cutting bed whose surface dimensions are of course larger than those of the panes to be cut; since the dimensions of the panes normally used in the European market are 3210 x 2400 millimeters, it is possible to transport the machine in a container or truck without having to remove its components and subsequently reassemble them, by arranging the machine so as to use the diagonal of the container or truck.

With the dimensions of tables for non-European markets, which are normally 3760 x 2750 millimeters, the tables have to be disassembled and folded for transport in containers, for transport by ship, or in a truck, for land transport.

This fact entails that after manufacturing and fine-tuning the machine, which entails aligning the worktable, aligning the guides with racks for the sliding of the cutting bridge, and providing the corresponding electrical wiring and factory testing, the machine has to be disassembled in order to be loaded into the container or truck, requiring disassembly of the cutting bridge and folding of the cutting table.

When the machine arrives at its destination, it requires the intervention of a specialized technician, who must reassemble the table precisely and so that it is perfectly leveled, with the bridge perfectly aligned so as to ensure a right-angle cut at exactly 90°, in addition to providing the electrical wiring for connection to the control panel and performing a corresponding second testing session.

All this sequence of operations requires relatively long times and accordingly entails higher costs.

Conventional cutting tables have a cutting bridge, which is normally fitted on carriages, which have two upper sliding wheels and a lower driving pinion, which are arranged so as to keep the cutting head in an intermediate space, which inevitably creates unused spaces, and therefore, by utilizing to the fullest possible extent the dimensions of a container, the maximum obtainable width is approximately 2520 millimeters, i.e., less than the size of the panes that are used in non-European markets, and therefore for these markets it is necessary to provide a machine that has larger dimensions and requiring so the above described disassembly.

The aim of the invention is to solve the problems described above, by providing a cutting table that allows to optimize the useful cutting dimensions, and which can be inserted in a container with standard dimension, for example of 2.44 m x 2.44 m x 6.08 m, and is capable of working on a glass pane that has a maximum width of 2935 millimeters, and is therefore larger than non-European standards.

Within this aim, an object of the invention is to provide a cutting table that has refinements that allow better utilization of the surface of the cutting table, thus allowing to have structures that are simpler and less heavy for equal pane sizes being cut.

Another object of the present invention is to provide a cutting table that thanks to its particular constructive characteristics is capable of giving the greatest assurances of reliability and safety use.

Another object of the present invention is to provide a cutting table that can be easily obtained starting from commonly commercially available elements and materials and is further competitive from a merely economical standpoint.

This aim and these and other objects that will become better apparent hereinafter are achieved by a cutting table particularly for glass panes and the like that allows optimization of the useful cutting dimensions, according to the invention, comprising at least one frame, which forms a cutting bed on which a cutting bridge can move, said bridge supporting a cutting head and being able to slide on guides fixed to said frame by means of sliding carriages provided with two mutually spaced upper wheels that can engage the upper part of said guides, characterized in that it comprises at least one central upper wheel, which is arranged between said upper wheels and at least two lower abutment elements, which can engage the lower part of said guides and are positioned on opposite sides of said central upper wheel.

Further characteristics and advantages will become better apparent from the description of a preferred but not exclusive embodiment of a cutting table particularly for glass panes and the like with means for optimizing the useful cutting dimensions, illustrated by way of non-limiting example in the accompanying drawings, wherein:
Figure 1 is a side elevation view of the cutting table according to the invention;

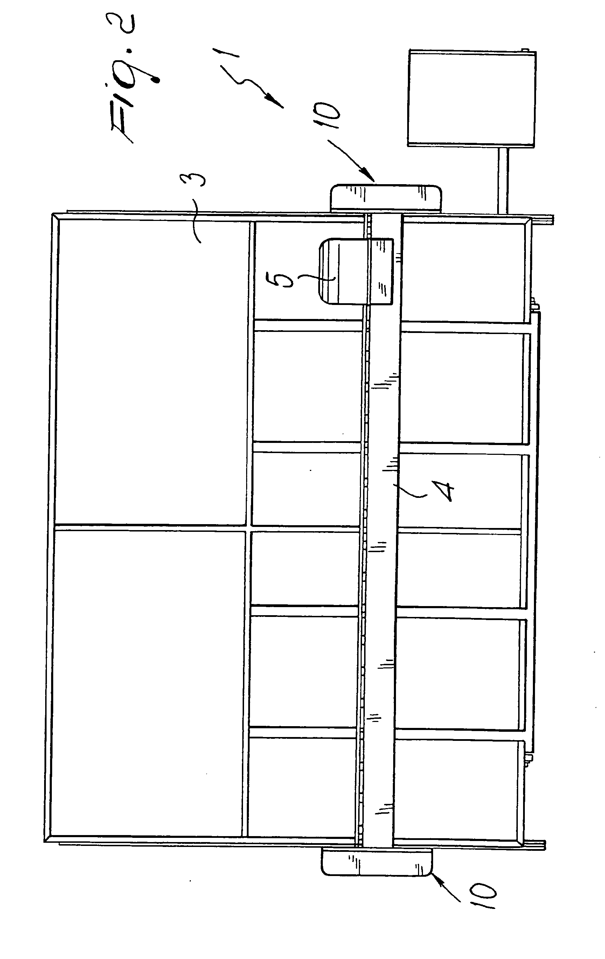

Figure 2 is a top plan view of the cutting table;

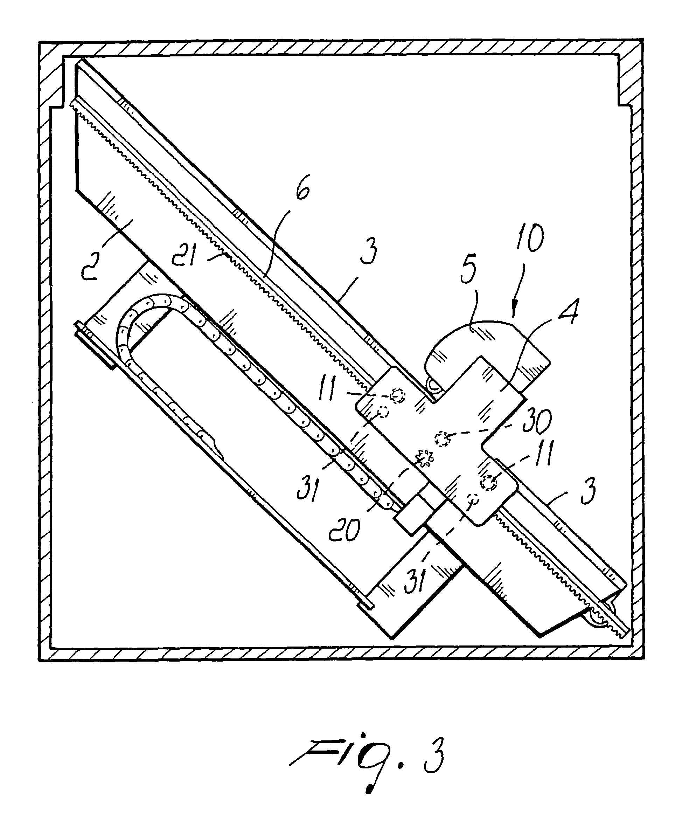

Figure 3 is a schematic view of the arrangement of the cutting table inside a standard container;
Figure 4 is a view of the arrangement of the cutting bridge at one end of the cutting table;
Figure 5 is a view of the arrangement of the cutting bridge at the other end of the cutting table;
Figure 6 is a schematic sectional view, taken along the line VI-VI of Figure 5;
Figure 7 is a transverse sectional view, with the cutting bridge arranged in an intermediate position;
Figure 8 is a schematic view of a large cutting table with the cutting bridge, according to the invention.

With reference to the figures, the cutting table particularly for glass panes and the like with means for optimizing the useful cutting dimensions, generally designated by the reference numeral 1, comprises a frame 2, which forms a cutting bed 3, on which a cutting bridge 4 can move advantageously so as to remain parallel to the longer side.

The cutting bridge 4 supports a cutting head 5 of the conventional type and can slide on guides 6, which are advantageously of the rack type.

For sliding, the cutting bridge has, at both of its ends, sliding carriages, generally designated by the reference numeral 10 provided with two upper wheels 11, which are mutually spaced and engage the upper part of the fixed guides 6.

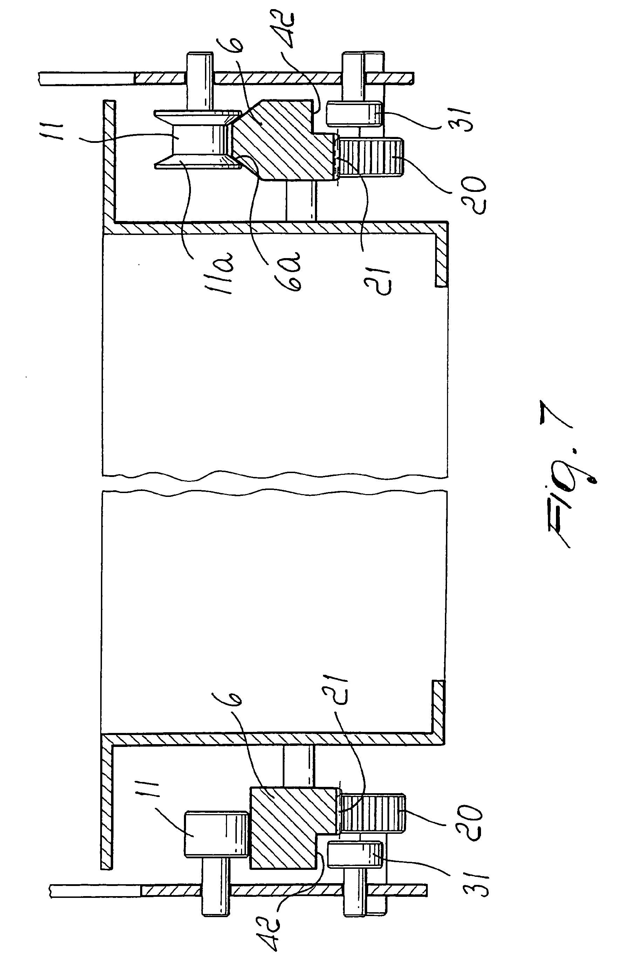

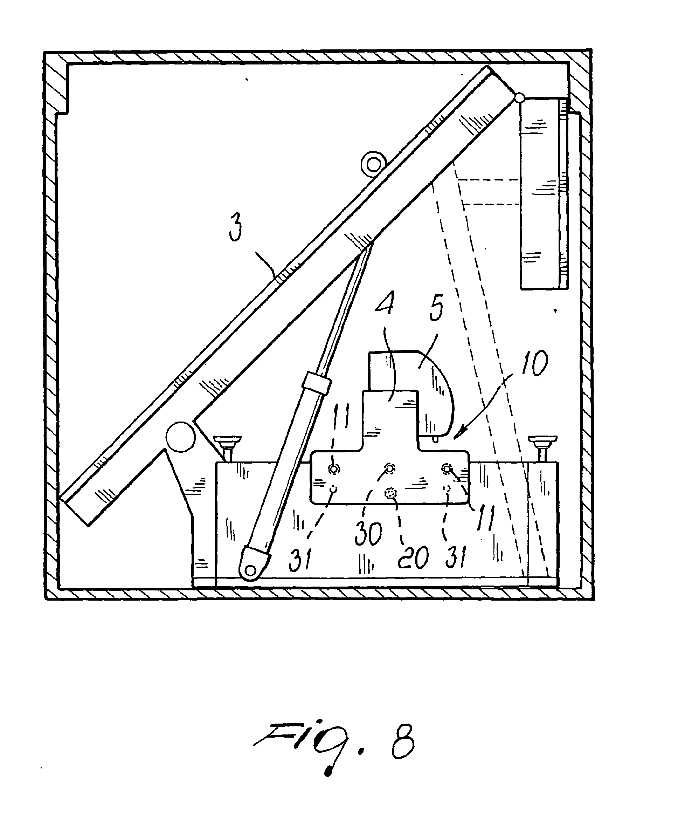

More specifically, as shown in Figures 6 and 7, a first one of the guides 6 has a trapezoidal upper portion 6a and the corresponding upper wheels 11 are provided with a flange 11a for centering.

The guides 6 arranged on the opposite side are flat in an upward region and the upper wheels 11 have no flanges in order to allow adaptation in an axial direction.

A driving pinion 20 is provided below the guides 6, is preferably arranged centrally, and engages the rack or rack portion 21, which is formed on the lower face of the guides 6.

The particular characteristic of the invention consists in that each carriage 10 has at least one central upper wheel 30 which is arranged between the upper wheels 11 and engages the upper part of the guides 6.

Moreover, lower abutment elements are provided on each carriage which are constituted by abutment wheels 31, which engage the lower face of the guides 6 and are arranged on opposite sides with respect to the central upper wheel.

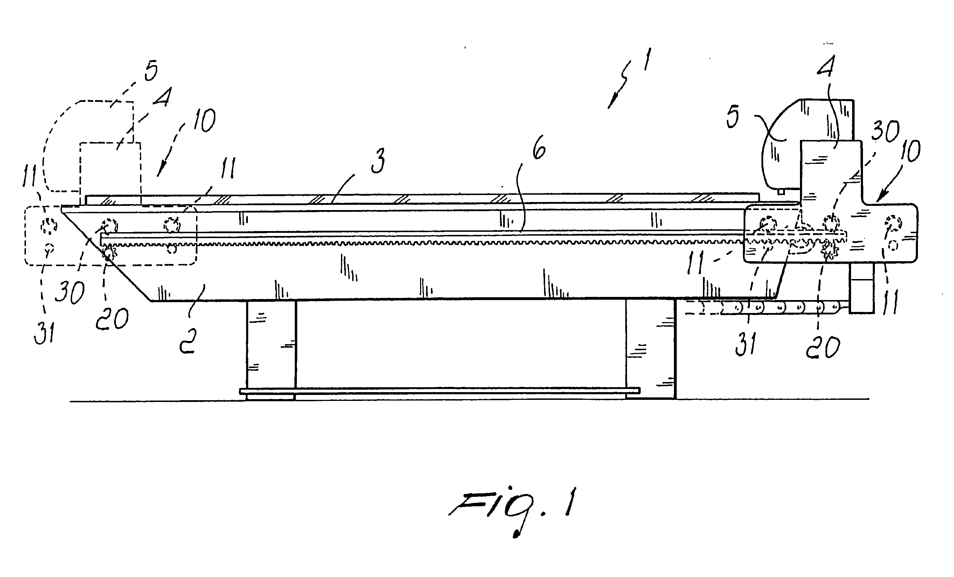

The presence of the central upper wheel 30 and of the abutment wheels 31 allows, as shown in Figure 1, to make the carriage 10 protrude with respect to the end of the corresponding guide 6 until it is supported only by the central wheel 30 and by one of the upper wheels 11.

The carriage 10 can protrude from both ends and accordingly allows to optimize the utilization of the upper surface.

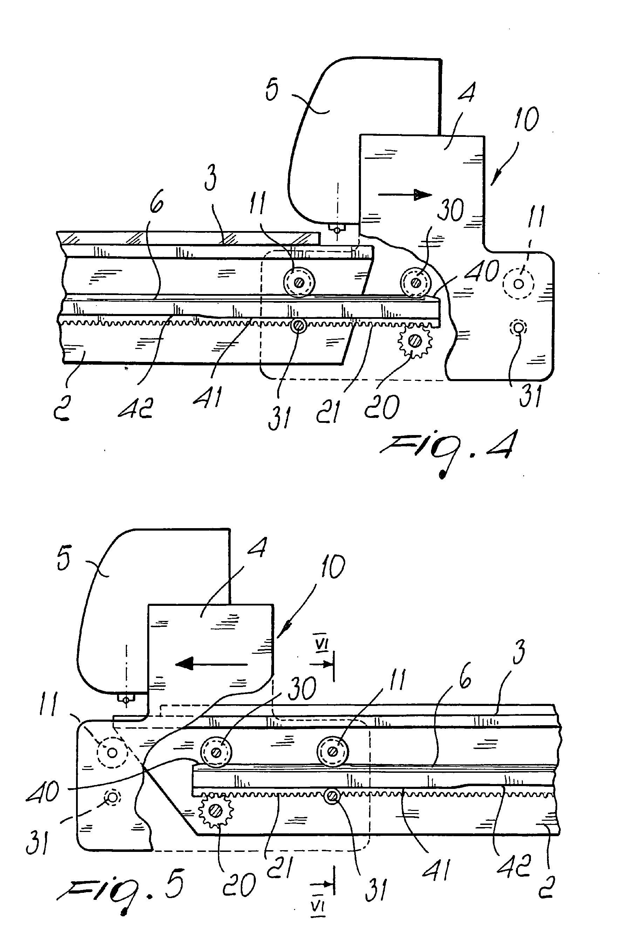

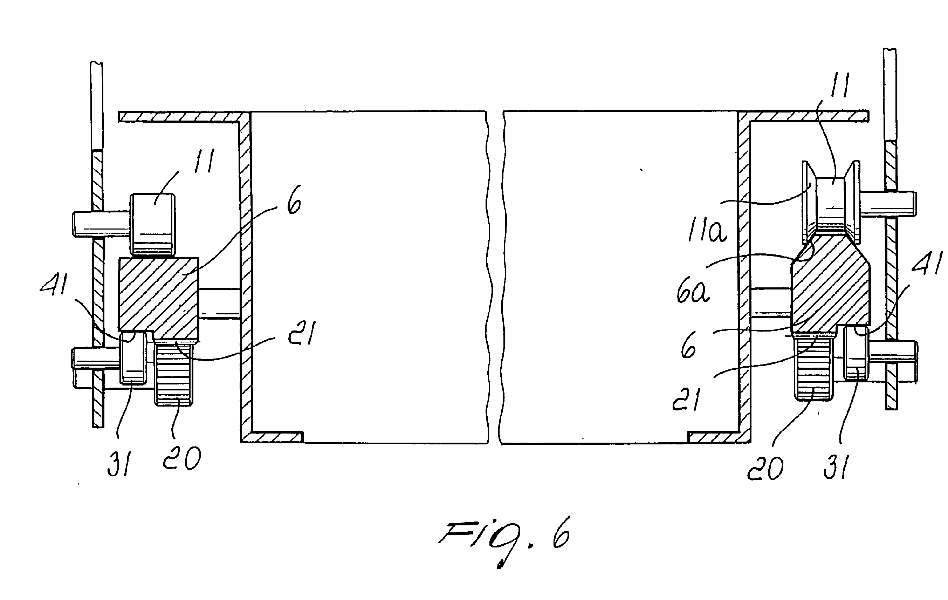

As shown more clearly in Figures 4 and 5, the guides 6 have, at their ends, a guiding bevel 40, which facilitates engagement with the upper wheel that had protruded with respect to the guides.

Moreover, the guides 6 have end portions, designated by the reference numeral 41, which are higher so as to engage the abutment wheels 31 in order to stably retain the bridge by way of the engagement of the carriages.

In the central portion, the guides 6 have a recess 42 with a consequent disengagement of the abutment wheels 31, as shown in Figure 7.

With the arrangement described above, therefore, a carriage for the cutting bridge is provided which allows to optimize the utilization of the surfaces, since for an equal useful width of the machine the presence of the central wheel allows both ends of the carriage to protrude with respect to the fixed guide, consequently gaining a portion that allows to insert in a container, such as one having the standard dimensions of 2.44 m x 2.44 m x 6.08 m, without any disassembly, a cutting table that is capable of processing panes that have non-European measurements.

In this way, the machine has an optimized width that is within the standard dimensions of pallets that may be of 80 cm x 120 cm or multiples of such dimensions, which cause no problem as regards length, since the dimensions are quite sufficient to contain the cutting table.

Moreover, the particular type of carriage 10 allows to better utilize the cutting bed and it is therefore convenient to use a carriage 10 with three upper wheels even when disassembly of the machine is required, as shown in Figure 8.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2004A000639 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cutting table particularly for glass panes and the like, that allows optimization of the useful cutting dimensions, comprising a frame (2), which forms a cutting bed (3) on which a cutting bridge (4) can move, said bridge (4) supporting a cutting head (5) and being able to slide on guides (6) fixed to said frame (2) by means of sliding carriages (10) provided with two mutually spaced upper wheels (11) that can engage the upper part of said guides (6), **characterized in that** it comprises at least one central upper wheel (30), which is arranged between said upper wheels (11) and at least two lower abutment elements (31), which can engage the lower part of said guides (6) and are positioned on opposite sides of said central upper wheel (30).

2. The cutting table according to claim 1, **characterized in that** it comprises a driving pinion (20), which is arranged centrally on said carriages (10) and can engage the rack portion (21) formed on the lower face of said guides (6), said driving pinion (20) being arranged between said lower abutment elements (31).

3. The cutting table according to the preceding claims, **characterized in that** said lower abutment elements comprise abutment wheels (31), which can engage the lower face of said guides (6).

4. The cutting table according to claim 3, **characterized in that** said guides (6) have, at their ends, along portions that correspond at least to the distance between said central upper wheel (30) and one of said upper wheels (11), a higher part (41) for the engagement of said lower abutment wheels (31) with the lower face of said guides (6).

5. The cutting table according to one or more of claims 3 or 4, **characterized in that** said guides (6) have, at their central portion, a recess (42) for the disengagement of said lower abutment wheels (31).

6. The cutting table according to one or more of the preceding claims, **characterized in that** said guides (6) have, at their ends, a guiding bevel (40) for facilitating engagement with the upper wheel (30) that has protruded with respect to said guides (6).

7. The cutting table according to one or more of the preceding claims, **characterized in that** one of said guides (6) has a substantially trapezoidal upper portion (6a) and the corresponding upper wheels (11) are provided with a centering flange (11a), the opposite guide (6) being flat in an upward region and the upper wheels (11) being without flange.

8. The cutting table according to one or more of the preceding claims, **characterized in that** it has a maximum width which corresponds substantially to the size of the diagonal of a standard container, in order to insert in a container, without disassembly, the cutting table with a cutting bed (3) that can be used for panes up to 2935 millimeters.
